# EUROPEAN PATENT APPLICATION

(11) **EP 4 685 958 A1**
(43) Date of publication of application: **28.01.2026**
(21) Application number: 24841918.6
(22) Date of filing: 19.02.2024
(51) Int. Cl.: H01M 50/244

(54) **ENERGY STORAGE SYSTEM, ENERGY STORAGE MODULE, AND ELECTRIC APPARATUS**

(30) Priority: 20.07.2023 CN 202321913916 U
(71) Applicant: Contemporary Amperex Technology Co., Limited, Ningde, Fujian 352100 (CN)
(72) Inventor: HE, Shuangjiang, Ningde, Fujian 352100 (CN); ZHANG, Xuefang, Ningde, Fujian 352100 (CN); LI, Zhonghong, Ningde, Fujian 352100 (CN); XU, Jinmei, Ningde, Fujian 352100 (CN); WU, Kai, Ningde, Fujian 352100 (CN); ZHOU, Cong, Ningde, Fujian 352100 (CN); ZHAO, Haifeng, Ningde, Fujian 352100 (CN); TONG, Yiting, Ningde, Fujian 352100 (CN)
(74) Representative: Ziebig Hengelhaupt Intellectual Property Attorneys Patentanwaltskanzlei PartGmbB
(86) International application number: PCT/CN2024/077594
(87) International publication number: WO 2025/015912

(57) **Abstract**

Disclosed are an energy storage system, an energy storage module, and an electric apparatus. The energy storage system includes a main heat exchange medium pipeline, a heat exchange unit, a self-sealing joint unit, and at least one battery. The battery includes at least one battery cell, the heat exchange unit is used for exchanging heat with the battery cell, the heat exchange unit is provided with a heat exchange medium port for a heat exchange medium to enter or exit, and the heat exchange medium port is in communication with the main heat exchange medium pipeline via the self-sealing joint unit.

## Description

### CROSS-REFERENCE TO RELATED APPLICATIONS

The present disclosure is filed based on, and claims priority to, Chinese Patent Application No. 202321913916.7, filed on July 20, 2023 and entitled "Energy Storage System, Energy Storage Module and Electric Apparatus", the entire content of which is hereby incorporated herein by reference.

### TECHNICAL FIELD

The present disclosure relates to the technical field of new energy, and in particular to an energy storage system, an energy storage module used for an energy storage system, and an electric apparatus.

### BACKGROUND

New energy batteries are finding expanding applications in both daily life and industrial sectors. Currently, batteries are not only extensively employed in new energy vehicles and vessels, but also increasingly used in the field of energy storage. For example, energy storage containers with a large number of batteries are already common on the market.

In an energy storage system such as an energy storage container, batteries including a large number of battery cells are arranged. As the batteries generate substantial heat during operation, the energy storage system typically includes cooling pipelines among others to perform heat exchange with, thereby cooling, the battery cells. These cooling pipelines are usually connected to a main liquid coolant pipeline, which in turn are connected to a liquid cooling set for cooling a liquid coolant in the pipelines. During, for example, repair, replacement, removal, and mounting of batteries such as those in energy storage containers, how to improve work efficiency is a problem that the industry hopes to solve.

### SUMMARY

To solve the above technical problem, the present disclosure provides an energy storage system, an energy storage module used for the energy storage system, and an electric apparatus, which help reduce the time required for removal and mounting work and facilitate removal and mounting work.

This present disclosure is implemented through the following technical solutions:
A first aspect of the present disclosure provides an energy storage system, comprising a main heat exchange medium pipeline, a heat exchange unit, a self-sealing joint unit, and at least one battery. The battery comprises at least one battery cell, the heat exchange unit is configured to exchange heat with the battery cell, the heat exchange unit is provided with a heat exchange medium port for a heat exchange medium to enter or exit, and the heat exchange medium port is in communication with the main heat exchange medium pipeline via the self-sealing joint unit.

As the heat exchange medium port of the heat exchange unit is in communication with the main heat exchange medium pipeline via the self-sealing joint unit, the self-sealing joint unit can be mainly operated when the heat exchange unit is disconnected from the main heat exchange medium pipeline. In addition, due to a self-sealing effect of the self-sealing joint unit, the heat exchange medium does not flow out from a side of the heat exchange unit and a side of the main heat exchange medium pipeline. Therefore, when one or some batteries and a heat exchange unit that exchanges heat with the battery (also referred to as "heat exchange unit to be removed") have to be disassembled from and assembled into the energy storage system for repair, replacement, transportation, etc., the heat exchange unit to be removed and a heat exchange unit in communication with the heat exchange unit to be removed, and even the heat exchange medium in the entire battery cluster do not have to be removed in a time-consuming and labor-intensive manner. Instead, the heat exchange unit to be removed can be removed in a state in which the heat exchange medium is enclosed inside the heat exchange unit to be removed. In this way, a work step of discharging the heat exchange medium inside the heat exchange unit can be properly omitted, and a work step of filling the heat exchange medium into a remounted heat exchange unit can also be omitted, thereby simplifying the operations. In addition, the time required for removal and mounting work comprising discharging and refilling the heat exchange medium is also greatly reduced. Moreover, during transportation of an energy storage system such as an energy storage container, some batteries and heat exchange units may be removed from the energy storage container by a simple and easy operation of disconnecting the self-sealing joint unit, thereby reducing an overall transport weight and easily resolving a problem of difficult transportation caused by the energy storage container exceeding a load limit of a transport means.

In some embodiments, the self-sealing joint unit comprises a self-sealing joint and a branch pipeline connected to the self-sealing joint.

As the self-sealing joint unit comprises the self-sealing joint and the branch pipeline connected to the self-sealing joint, the flexibility in a mounting position of the self-sealing joint can be improved, and an operation space around the self-sealing joint can be further adjusted by using the branch pipeline to facilitate operations.

In some embodiments, the self-sealing joint comprises a first joint and a second joint that are connectable to and separable from each other, and is formed to allow the heat exchange medium to pass through when the first joint and the second joint are connected to each other, and the first joint and the second joint separately block the heat exchange medium when the first joint and the second joint are separated from each other.

Therefore, operations are simple, as the first joint and the second joint of the self-sealing joint can be switched, through connection and separation, between a state in which the heat exchange medium is allowed to pass through and a state in which the heat exchange medium is separately blocked.

In some embodiments, either of the first joint and the second joint is an inserting-end joint, and the other is a receiving-end joint, and the self-sealing joint is formed to allow the heat exchange medium to flow through in a state in which the inserting-end joint is inserted into the receiving-end joint, and the inserting-end joint and the receiving-end joint separately block the heat exchange medium from flowing through in a state in which the inserting-end joint and the receiving-end joint are separated from each other.

As the self-sealing joint has a simple structure and the first joint and the second joint can be connected to and disconnected from each other by insertion and removal, operations are simple and time-saving, thereby helping reduce the work time required for removal and mounting and helping improve the work efficiency.

In some embodiments, the branch pipeline comprises a pipeline formed by a flexible pipe.

Therefore, the self-sealing joint may be connected to the main heat exchange medium pipeline and/or the heat exchange medium port of the heat exchange unit through the flexible pipe. As the flexible pipe can be bent, the flexibility in mounting positions of the heat exchange unit, the self-sealing joint, etc. can be greatly improved; an arrangement position of the heat exchange unit can be adapted in a relatively large space range by designing the shape, length, etc. of the flexible pipe; and a relatively large space can be reserved between the heat exchange unit and the main heat exchange medium pipeline and between adjacent heat exchange units to facilitate operations.

In some embodiments, the first joint is integrated into the heat exchange medium port of the heat exchange unit; the second joint is mounted at one end of the branch pipeline; and the other end of the branch pipeline is connected to the main heat exchange medium pipeline.

As the first joint of the self-sealing joint can be integrated into the heat exchange medium port of the heat exchange unit, the number of parts can be reduced, and a mounting work step can be accordingly reduced. In addition, it is convenient to fix a position of the self-sealing joint, and a pipeline, etc. arranged in a space around the heat exchange unit can also be reduced. In addition, as the second joint is connected to the main heat exchange medium pipeline through the branch pipeline, the flexibility of the mounting position of the heat exchange unit can be improved, and it is also convenient to reserve an operation space between the heat exchange unit and the main heat exchange medium pipeline and between adjacent heat exchange units, etc. to facilitate operations.

In some embodiments, the self-sealing joint unit further comprises a quick-connection joint, and the first joint is mounted to the heat exchange medium port of the heat exchange unit via the quick-connection joint; the second joint is mounted at one end of the branch pipeline; and the other end of the branch pipeline is connected to the main heat exchange medium pipeline.

As the first joint of the self-sealing joint is connected to the heat exchange medium port of the heat exchange unit via the quick-connection joint that can be quickly and easily mounted to the heat exchange medium port, the mounting reliability and the removal and mounting convenience of the first joint relative to the heat exchange medium port of the heat exchange unit can be improved. In addition, as the quick-connection joint is employed, improvement of the assembly efficiency of the quick-connection joint and the heat exchange unit can be facilitated.

In some embodiments, the branch pipeline comprises a first branch pipeline and a second branch pipeline, and the first joint is connected to the heat exchange medium port of the heat exchange unit via the first branch pipeline; and the second joint is connected to the main heat exchange medium pipeline via the second branch pipeline.

As the first joint and the second joint are both connected through the branch pipeline, the flexibility in the mounting position of the self-sealing joint, etc. can be greatly improved; the arrangement position of the heat exchange unit can be adapted in a relatively large space range by designing the shape, length, etc. of the branch pipeline; and a relatively large space can be reserved between the heat exchange unit and the main heat exchange medium pipeline and between heat exchange units to facilitate operations.

In some embodiments, the second branch pipeline is formed by a three-way joint having a first port, a second port, and a third port, the first port and the second port are connected to the main heat exchange medium pipeline, and the second joint of the self-sealing joint is integrated into the third port of the three-way joint.

As the second branch pipeline is formed by the three-way joint connected to the main heat exchange medium pipeline and the second joint of the self-sealing joint is integrated into the three-way joint, the number of parts can be reduced. In addition, it is convenient to fix a position of the self-sealing joint, and a pipeline, etc. arranged in a space around the main heat exchange medium pipeline can also be reduced.

In some embodiments, the main heat exchange medium pipeline comprises a main heat exchange medium supply pipeline and a main heat exchange medium return pipeline, and the heat exchange medium port of the heat exchange unit comprises a heat exchange medium inlet and a heat exchange medium outlet, the heat exchange medium inlet is in communication with the main heat exchange medium supply pipeline through the self-sealing joint unit, and the heat exchange medium outlet is in communication with the main heat exchange medium return pipeline through the self-sealing joint unit.

As the self-sealing joint unit is separately provided between the heat exchange medium inlet and the main heat exchange medium supply pipeline and between the heat exchange medium outlet and the main heat exchange medium return pipeline, when the heat exchange unit is removed and mounted for removing or replacing a battery pack, the self-sealing joint on a side of the heat exchange medium inlet and the self-sealing joint on a side of the heat exchange medium outlet can be operated separately, and the heat exchange medium inside the heat exchange unit to be removed and the heat exchange medium in the main heat exchange medium supply pipeline and the main heat exchange medium return pipeline may not be discharged. Therefore, the operations are simple. Moreover, for the heat exchange unit to be removed, the heat exchange medium can be blocked from both the inlet side and the outlet side of the heat exchange unit to be removed, thereby reducing the risk of heat exchange medium leakage.

In some embodiments, a plurality of heat exchange units are provided, the plurality of heat exchange units comprise a first heat exchange unit and a second heat exchange unit, the first heat exchange unit and the second heat exchange unit are arranged to communicate with each other in such a manner that the heat exchange medium sequentially flows through the heat exchange medium inlet of the first heat exchange unit, the heat exchange medium outlet of the first heat exchange unit, the heat exchange medium inlet of the second heat exchange unit, and the heat exchange medium outlet of the second heat exchange unit, the heat exchange medium inlet of the first heat exchange unit is connected to the heat exchange medium supply pipeline through the self-sealing joint unit, and the heat exchange medium outlet of the second heat exchange unit is connected to the heat exchange medium return pipeline through the self-sealing joint unit.

Therefore, two or more heat exchange units may be connected in series. If several heat exchange units are connected in series, the self-sealing joint unit may be provided at each of the heat exchange medium inlet of the most upstream heat exchange unit and the heat exchange medium outlet of the most downstream heat exchange unit in the heat exchange unit string. In this way, compared with a conventional case, the number of self-sealing joints used can be reduced while the discharge amount of the heat exchange medium is suppressed and the work time is accordingly reduced, thereby helping reduce system flow resistance and further helping reduce the number of parts and a corresponding weight.

In some embodiments, the plurality of heat exchange units further comprise at least one third heat exchange unit, the first heat exchange unit, the third heat exchange unit, and the second heat exchange unit are arranged to communicate with one another in such a manner that the heat exchange medium sequentially flows through the heat exchange medium inlet of the first heat exchange unit, the heat exchange medium outlet of the first heat exchange unit, the heat exchange medium inlet of the third heat exchange unit, the heat exchange medium outlet of the third heat exchange unit, the heat exchange medium inlet of the second heat exchange unit, and the heat exchange medium outlet of the second heat exchange unit, the heat exchange medium inlet of the first heat exchange unit is connected to the heat exchange medium supply pipeline through the self-sealing joint unit, and the heat exchange medium outlet of the second heat exchange unit is connected to the heat exchange medium return pipeline through the self-sealing joint unit.

Therefore, if several heat exchange units are connected in series, the self-sealing joint unit may be provided at each of the heat exchange medium inlet of the most upstream heat exchange unit and the heat exchange medium outlet of the most downstream heat exchange unit in the heat exchange unit string, so that the self-sealing joint units on the most upstream side and the most downstream side can be operated during removal and mounting. In this way, compared with a conventional case, the number of self-sealing joints used can be reduced while the discharge amount of the heat exchange medium is suppressed and the work time is accordingly reduced, thereby helping reduce system flow resistance. In addition, there may be a plurality of heat exchange units between the most upstream heat exchange unit and the most downstream heat exchange unit in the heat exchange unit string, and the heat exchange units may be connected in series, in parallel, or in a series-parallel hybrid manner. This can improve the arrangement flexibility of the heat exchange units. In addition, whether the whole or a part of the heat exchange unit string is removed may be selected based on a specific situation.

In some embodiments, the plurality of heat exchange units comprise a plurality of fourth heat exchange units, the heat exchange medium inlets of the fourth heat exchange units are separately connected to the heat exchange medium supply pipeline in parallel through the self-sealing joint unit, and the heat exchange medium outlets of the fourth heat exchange units are separately connected to the heat exchange medium return pipeline in parallel through the self-sealing joint unit.

As several heat exchange units may be connected in parallel, when a heat exchange unit is removed and mounted, it is unnecessary to perform removal and mounting operations on another heat exchange unit connected in parallel, thereby helping simplify the operations, save the time for an operation including discharge of the heat exchange medium, and minimize flow blockage of the heat exchange medium in the heat exchange units. In addition, when some battery packs are to be removed to reduce the overall weight of the energy storage system for ease of transportation, the battery packs to be removed can be flexibly selected based on a required weight decrease.

In some embodiments, the heat exchange unit comprises a cooling plate for battery cooling, and the heat exchange medium port comprises a cooling plate-specific heat exchange medium port provided on the cooling plate.

In this way, the heat exchange unit can be widely used in battery cooling scenarios. Moreover, with respect to use in a battery cooling scenario, the cooling plate in a battery can be directly used as the heat exchange unit, so that the energy storage system has a simple structure and occupies less space.

In some embodiments, a plurality of heat exchange units are provided, and the plurality of heat exchange units communicate with one another to form a heat exchange unit assembly, the heat exchange unit assembly is provided with an assembly-specific heat exchange medium port shared by the heat exchange unit assembly, and the assembly-specific heat exchange medium port is connected to an assembly-specific self-sealing joint.

As the shared assembly-specific heat exchange medium port and the assembly-specific self-sealing joint can be provided for the heat exchange unit assembly, the heat exchange unit assembly can be removed and mounted as a whole unit. The operations are simple, and the heat exchange medium in the heat exchange unit assembly does not have to be discharged. Such implementation helps reduce the work time and improve the work efficiency, and for example, is applicable to a scenario of removing and mounting a whole battery cluster.

In some embodiments, the self-sealing joint is connected to the branch pipeline in a manner comprising interference-fit connection, hot-melt connection, welding, or snap-fit connection.

Therefore, the connection between the self-sealing joint and the branch pipeline can be easily realized in a simple manner.

A second aspect of the present disclosure provides an energy storage module, configured as the energy storage system according to the first aspect of the present disclosure. The energy storage system comprises a main heat exchange medium pipeline, and the energy storage module comprises a heat exchange unit, a self-sealing joint unit, and at least one battery cell. The heat exchange unit is configured to exchange heat with the battery cell, the heat exchange unit is provided with a heat exchange medium port for a heat exchange medium to enter or exit, and the self-sealing joint unit is configured to communicate the heat exchange medium port with the main heat exchange medium pipeline.

As the self-sealing joint unit is configured for communication between the heat exchange medium port of the heat exchange unit and the main heat exchange medium pipeline, the heat exchange unit in the energy storage module and the main heat exchange medium pipeline may be connected to or disconnected from each other by mainly operating the self-sealing joint unit. Moreover, owing to a self-sealing effect of the self-sealing joint unit, the heat exchange medium does not flow out from a side of the heat exchange unit and a side of the main heat exchange medium pipeline. Therefore, when the energy storage system is to be disassembled for repair, replacement, transportation, etc., one or some energy storage modules can be removed and mounted in a targeted manner, and the removal and mounting work is simple and time-saving. In addition, one or some energy storage modules can be easily removed to reduce the overall weight of the energy storage system for ease of transportation, thereby easily resolving a problem of difficult transportation caused by the overall weight of the energy storage system exceeding a load limit of a transport means.

A third aspect of the present disclosure provides an electric apparatus, including the energy storage system according to the first aspect of the present disclosure or the energy storage module according to the second aspect of the present disclosure. The battery cell is configured to supply electric energy to the electric apparatus.

Therefore, the electric apparatus can use the electric energy stored in the energy storage system or the energy storage module, thereby improving the stability of electricity consumption of the electric apparatus. Moreover, electric energy can be stored in an off-peak time period of electricity usage or an idle time period of the electric apparatus, and power can be supplied by the energy storage system or the energy storage module to the electric apparatus in a peak time period of electricity usage or a use time period of the electric apparatus. Therefore, this is beneficial for improving the rationality and cost-effectiveness of electricity usage.

### Effects

The present disclosure can provide an energy storage system, an energy storage module, and an electric apparatus that help reduce the time required for removal and mounting work and facilitate removal and mounting work.

### DESCRIPTION OF DRAWINGS

Various other advantages and benefits will become clear to a person of ordinary skill in the art upon reading the detailed description of the preferred implementations below. The accompanying drawings are used only for the purpose of illustrating the preferred implementations and are not to be construed as limitations on the present disclosure. Moreover, the same reference numerals are used to denote the same components throughout the accompanying drawings. In the accompanying drawings:
FIG. 1 is a schematic structural diagram of an energy storage system according to some embodiments of the present disclosure;
FIG. 2 is a partial schematic structural diagram of an energy storage system according to some embodiments of the present disclosure;
FIG. 3 is a schematic diagram of a self-sealing joint unit and peripheral structures thereof according to some embodiments of the present disclosure;
FIG. 4 is a schematic diagram of a self-sealing joint unit and peripheral structures thereof according to some embodiments of the present disclosure;
FIG. 5 is a schematic diagram of a self-sealing joint unit and peripheral structures thereof according to some embodiments of the present disclosure;
FIG. 6 is a schematic diagram of a self-sealing joint unit and peripheral structures thereof according to some embodiments of the present disclosure;
FIG. 7 is a partial schematic structural diagram of an energy storage system according to some embodiments of the present disclosure;
FIG. 8 is a partial schematic structural diagram of an energy storage system according to some embodiments of the present disclosure;
FIG. 9 is a schematic cross-sectional diagram of a disconnected state of a self-sealing joint according to some embodiments of the present disclosure;
FIG. 10 is a schematic cross-sectional diagram of a connected state of a self-sealing joint according to some embodiments of the present disclosure;
FIG. 11 is a schematic flowchart of a method for removing and mounting a heat exchange unit in an energy storage system according to some embodiments of the present disclosure; and
FIG. 12 is a schematic structural diagram of a vehicle that uses a battery as a power supply according to some embodiments of the present disclosure.

### Description of numeral numbers

1000-energy storage system; P-liquid cooling set; L-pipeline;
100-main heat supply medium pipeline; 101-heat exchange medium supply pipeline; 102-heat exchange medium return pipeline;
200-battery cluster; 201-battery pack; 202A-energy storage compartment; 202B-electrical device compartment; 203-assembly-specific self-sealing joint; 204-assembly-specific heat exchange medium port; 210-heat exchange unit; 211-self-sealing joint;
211 a-first joint; 211b-second joint; 2111a-first valve core spring; 2111b-second valve core spring; 2112a-first valve core; 2112b-second valve core; 2113a-first valve core sealing ring; 2113b-second valve core sealing ring; 2114a-first valve body; 2114b-second valve body; 2115b-valve rod; 2116a-first joint terminal; 2116b-second joint terminal; 2117b-second joint sleeve; 2118b-operating rod; 2119b-valve rod sealing ring; 2120b-second valve core end sealing ring; 2121a-annular projection; 2121b-annular protrusion; 2122a-first terminal sealing ring; 2122b-second terminal sealing ring;
212-self-sealing joint unit; 213-branch pipeline; 213a-first branch pipeline; 213b-second branch pipeline; 214-heat exchange medium port; 214a-heat exchange medium inlet; 214b-heat exchange medium outlet; 215-quick-connection joint; 216-three-way joint; 216a-first port; 216b-second port; 216c-third port;
2000-vehicle; 2001-battery; 2002-controller; 2003-motor.

### DESCRIPTION OF EMBODIMENTS

Embodiments of the technical solutions of the present disclosure are described in detail below with reference to the drawings. The following embodiments are only used to more clearly illustrate the technical solutions of the present disclosure, and thus are used as examples only, and are not intended to limit the protection range of the present disclosure.

Unless defined otherwise, all technical and scientific terms used herein have the same meaning as commonly understood by a person skilled in the art to which the present disclosure belongs; the terms used herein are used for describing particular embodiments only and are not intended to limit the present disclosure; and the terms "comprising", "including", and "having" and any variations thereof in the description, claims and the above drawings of the present disclosure are intended to cover non-exclusive inclusion.

In the description of the embodiments of the present disclosure, the technical terms "first", "second", "third", "fourth", and the like are used only for distinguishing between different objects, but cannot be construed to indicate or imply relative importance or implicitly indicate the number, specific order, or primary/secondary relationship of indicated technical features. In the description of the embodiments of the present disclosure, "a plurality of" means two or more unless specifically defined otherwise.

Reference to "an embodiment" herein means that a particular feature, structure, or characteristic described with reference to the embodiment can be included in at least one embodiment of the present disclosure. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present disclosure, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present disclosure, unless explicitly specified and defined otherwise, the terms "mount", "couple", "connect", and "fasten" should be broadly understood, for example, they may be a fixed connection, a detachable connection, or an integral connection; or may be a mechanical connection, an electrical connection, or a flow path connection; or may be a direct connection, or an indirect connection via an intermediate medium, or internal communication between two elements or interaction between two elements. In addition, unless otherwise specified and limited, the technical term "communication" should be broadly understood, which may be direct communication between two elements or indirect communication between two elements via another passage. A person of ordinary skill in the art may understand the specific meanings of the above terms in the embodiments of the present disclosure based on a specific situation.

The following describes the present disclosure in detail.

At present, new energy batteries are finding expanding applications in both daily life and industrial sectors. New energy batteries are used not only in energy storage power systems such as hydropower, thermal power, wind power, and solar power plants, but also in electric transport means such as electric bicycles, electric motorcycles, and electric automobiles, as well as military equipment, aerospace, and many other fields. As an application field of power batteries continues to expand, a market demand for power batteries continues to increase.

In the embodiments of the present disclosure, a battery may be a battery cell (sometimes also referred to as a cell), or the battery may be a battery module or a battery pack including a plurality of battery cells. A battery cell refers to a basic unit that can realize mutual conversion between chemical energy and electric energy, and can be used to manufacture a battery module or a battery pack, so as to supply power to an electric apparatus. The battery cell may be a secondary battery, and the secondary battery refers to a battery cell that can be reused by activating an active material by charging the battery cell after discharging. The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like, and the embodiments of the present disclosure set no limitation thereto.

In an energy storage system such as an energy storage container, batteries including a large number of battery cells are arranged, for example, a plurality of battery packs are arranged. As the battery packs generate substantial heat during operation, the energy storage system typically includes cooling pipelines among others to perform heat exchange with, thereby cooling, the battery cells. These cooling pipelines are usually connected to a main liquid coolant pipeline, which in turn are connected to a liquid cooling set for cooling a liquid coolant in the pipelines.

When one or some battery packs in the energy storage system fail and need to be replaced, a method currently used is to prepare a container for receiving a liquid coolant in advance and place the container at a relatively low position; then open a liquid coolant quick-discharge valve of a battery cluster including the battery pack to be removed, and discharge the liquid coolant in the entire battery cluster into the container for receiving the liquid coolant; then use compressed air, etc. from a liquid cooling set to purge a cooling pipeline of each battery pack individually, and discharge all liquid residual at the bottom of the cooling pipeline of each battery pack; subsequently, remove the battery pack to be removed and mount another battery pack as a replacement; and refill the entire battery cluster including the newly mounted battery pack with the liquid coolant. Herein, it should be noted that, in the present specification, a battery cluster includes a plurality of battery packs whose cooling pipelines are in communication (including serial communication, parallel communication, and hybrid communication with both serial connection and parallel connection) with each other. In the field of energy storage, a battery cluster is also referred to as an electric cabinet, and a battery pack is also referred to as an electric box.

The existing method described above suffers from issues such as time-consuming drainage and refilling of a liquid coolant, prolonged replacement of a battery pack, work complexity, etc. Moreover, as the liquid coolant needs to be refilled for the entire battery cluster including the battery pack, there are issues of high consumption and high costs of the liquid coolant. In addition, for complete drainage of a cooling pipeline, a liquid cooling set needs to work during a replacement process, and this requires special compilation of a working program, which is time-consuming and labor-intensive.

In addition, when an energy storage system such as an energy storage container needs to be transported, a problem of the energy storage container exceeding a load limit of a transport means sometimes needs to be resolved. How to reduce the weight of the energy storage container in a simple and easy manner is another problem that the industry expects to resolve.

With respect to the problems in the existing technologies, the present disclosure proposes such a design concept as follows: a self-sealing joint is applied to a cooling pipeline system of an energy storage system to disconnect cooling pipelines while blocking the cooling pipelines, so that work steps of discharging a liquid coolant and refilling the liquid coolant can be appropriately omitted, a discharge amount of the liquid coolant can be reduced, and further a work time required for replacing a battery pack and its heat exchange unit or remounting a battery pack and its heat exchange unit, etc. can be reduced, thereby improving work efficiency. Moreover, the design concept is suitable for reducing the weight in a simple and easy manner to meet transportation requirements.

Based on such a design concept, the present disclosure proposes an energy storage system. The energy storage system includes a main heat exchange medium pipeline, a heat exchange unit, a self-sealing joint unit, and at least one battery. The battery includes at least one battery cell, the heat exchange unit is configured to exchange heat with the battery cell, the heat exchange unit is provided with a heat exchange medium port for a heat exchange medium to enter or exit, and the heat exchange medium port is in communication with the main heat exchange medium pipeline via the self-sealing joint unit.

Therefore, the work time required for removing a battery pack and its heat exchange unit from the energy storage system or remounting a battery pack and its heat exchange unit, etc. can be reduced, and the removal and remounting operations can be simplified, thereby further improving the work efficiency and facilitating weight reduction to meet the transportation requirements.

The energy storage system provided in the embodiments of the present disclosure is applicable to, but not limited to, an electric apparatus such as a vehicle, vessel, aircraft, or spacecraft that uses a battery as a power supply.

The energy storage system provided in the embodiments of the present disclosure may be formed as an energy storage electric box, an energy storage electric cabinet, an energy storage container, etc.

The energy storage system provided in the embodiments of the present disclosure may be used in a commercial energy storage power station, or a household energy storage scenario, or a battery storage and transportation scenario.

In the following embodiments, an energy storage system 1000 according to an embodiment of the present disclosure is taken as an example for description. The following provides a description with reference to the accompanying drawings.

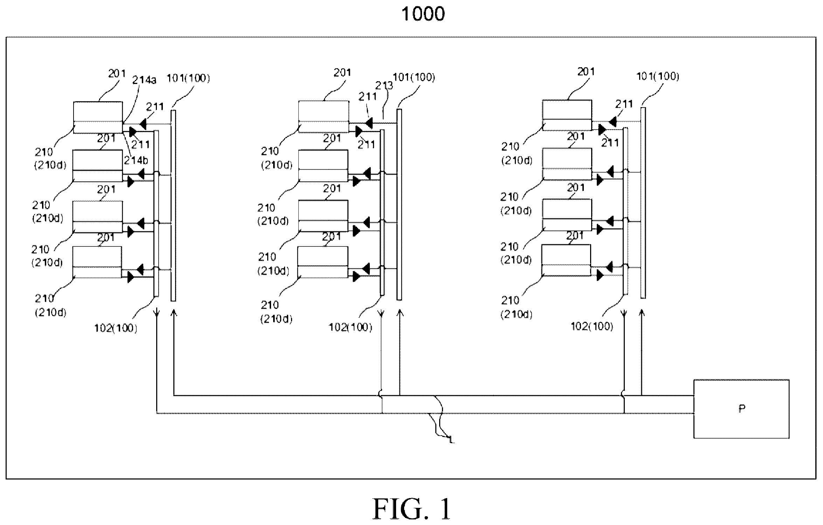

FIG. 1 is a schematic structural diagram of the energy storage system 1000 according to some embodiments of the present disclosure. As shown in FIG. 1, the energy storage system 1000 includes a main heat exchange medium pipeline 100, a heat exchange unit 210, a self-sealing joint unit 212, and at least one battery. The battery includes at least one battery cell. The heat exchange unit 210 is configured to exchange heat with the battery cell, the heat exchange unit 210 is provided with a heat exchange medium port 214 for a heat exchange medium to enter or exit, and the heat exchange medium port 214 is in communication with the main heat exchange medium pipeline 100 via the self-sealing joint unit 212.

The battery mentioned in the embodiments of the present disclosure refers to a single physical module that may include one or a plurality of battery cells to provide a higher voltage and capacity. There may be one or a plurality of battery cells (not shown in the figure), and a plurality of battery cells may be subjected to serial connection, parallel connection, or hybrid connection. The hybrid connection means that the plurality of battery cells are subjected to both serial connection and parallel connection.

In some embodiments, the battery may be a battery module. When there are a plurality of battery cells, the plurality of battery cells are arranged and fixed to form a battery module.

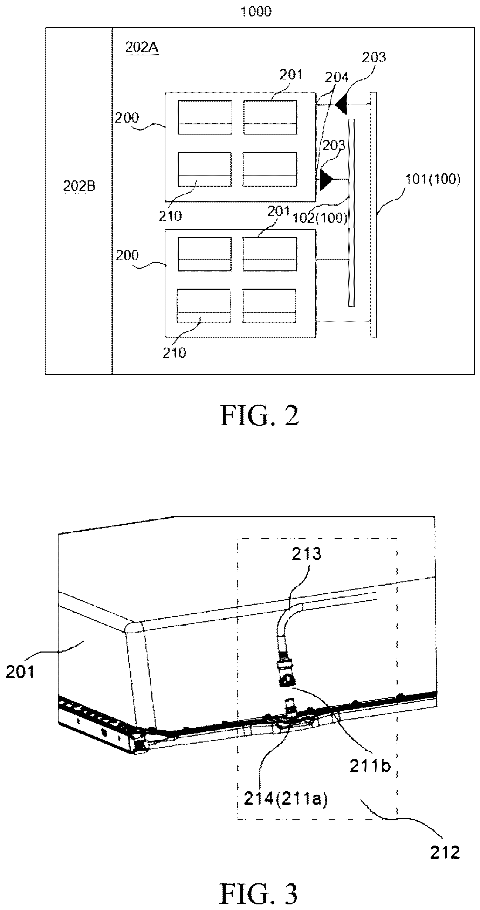

In some embodiments, the battery may be a battery pack. The plurality of battery cells may be subjected to serial connection, parallel connection, or hybrid connection directly, and then a combination formed by the plurality of battery cells is accommodated in an accommodating space and used as a battery pack. In addition, the battery pack may also be formed in a manner that the plurality of battery cells are first subjected to serial connection, parallel connection, or hybrid connection to form battery modules, and then the plurality of battery modules are subjected to serial connection, parallel connection, or hybrid connection to form a combination and used as a battery pack. Certainly, the battery pack may alternatively include only one battery module. In some embodiments described below, as shown in FIG. 1 and FIG. 2, an example with the battery being a battery pack 201 is described.

The battery pack 201 may further include other structures. For example, the battery pack may include a current converging component for implementing an electrical connection between the plurality of battery cells. In addition, the battery pack 201 may further include the heat exchange unit 210 used for exchanging heat with each battery cell.

In the embodiments of the present disclosure, the battery cell may be a secondary battery, and the secondary battery refers to a battery cell that can be reused by activating an active material by charging the battery cell after discharging.

The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like, and the embodiments of the present disclosure set no limitation thereto.

Although not shown in the figure, the battery cell generally includes an electrode assembly. The electrode assembly includes a positive electrode, a negative electrode, and a spacer. During charge and discharge of the battery cell, intercalation/de-intercalation of active ions (e.g., lithium ions) are enabled at the positive electrode and negative electrode by moving the active ions between the positive electrode and negative electrode. The spacer is provided between the positive electrode and the negative electrode to prevent the positive and negative electrodes from being short-circuited and to allow active ions to pass through.

In some embodiments, the electrode assembly is provided with a tab (not shown in the figure) that may conduct a current from the electrode assembly. The tab includes a positive tab and a negative tab.

In some embodiments, the battery cell may include a casing. The casing is used to enclose components such as the electrode assembly and the electrolyte. The casing may be a steel casing, an aluminum casing, a plastic casing (e.g., polypropylene), a composite metal casing (e.g., a copper-aluminum composite casing), an aluminum plastic film, or the like.

As an example, the battery cell may be a cylindrical battery cell, a prismatic battery cell, a pouch battery cell, or a battery cell of another shape, and the prismatic battery cell includes a square-housing battery cell, a blade-shaped battery cell, and a multi-prism battery cell, e.g., a hexagonal battery cell, and the like, and the present disclosure is not particularly limited.

The heat exchange medium mentioned in the embodiments of the present disclosure is a fluid for heat exchange with the battery cell in a pipeline. The so-called heat exchange refers to realizing heat transfer by using a temperature difference between the heat exchange medium and a periphery of each battery cell to reduce a temperature difference between the heat exchange medium and the battery cell, and may be used to heat or cool the battery cell. In some embodiments of the present disclosure, a case in which a temperature of each battery cell is adjusted by using a temperature difference between a liquid heat exchange medium and a periphery of the battery cell is taken as an example for description. In some embodiments, the heat exchange medium is called a liquid coolant or a refrigerant, and is mainly used to cool a battery cell. With respect to the liquid coolant, a suitable liquid coolant may be selected based on a specific situation. Specific examples of the liquid coolant include a glycol-based solution, water, etc.

In some embodiments, although not shown in the figure, the energy storage system may be, e.g., a regular cuboid structure, where the six faces of the cuboid are six outer walls of the energy storage system. The energy storage system is provided as a rectangular cuboid structure, which is beneficial to fixed placement and transportation of the energy storage system.

The interior of the energy storage system of the cuboid structure is a hollow structure, and the hollow structure may be divided into a plurality of functional compartments according to an actual need. For example, as shown in FIG. 2, the energy storage system 1000 may include an energy storage compartment 202A and an electrical device compartment 202B. The energy storage compartment 202A may be configured to accommodate a battery to store and supply electric energy, for example, may accommodate a plurality of battery packs 201. The electrical device compartment 202B may be configured to accommodate a thermal management component to adjust a temperature inside the energy storage system, and may also accommodate a control device, etc. to perform a management operation or an auxiliary operation on a part of the energy storage system. In some embodiments, the battery device compartment 202B may be further divided into a thermal management compartment for accommodating the thermal management component and a control compartment for accommodating the control device.

In some embodiments, positions of the energy storage compartment 202A and the electrical device compartment 202B of the energy storage system 1000 may be arranged according to an actual application. For example, as shown in FIG. 2, the energy storage compartment 202A may be disposed on one side of the energy storage system 1000, and the electronic device compartment 202B may be disposed on the other side of the energy storage system. Certainly, an arrangement manner different from that of FIG. 2 may alternatively be employed. For example, either the electrical device compartment 202B or the thermal management compartment and the control compartment may be arranged by using an upper space in the energy storage system 1000.

The following describes some embodiments of the present disclosure in detail with reference to FIG. 1 to FIG. 8.

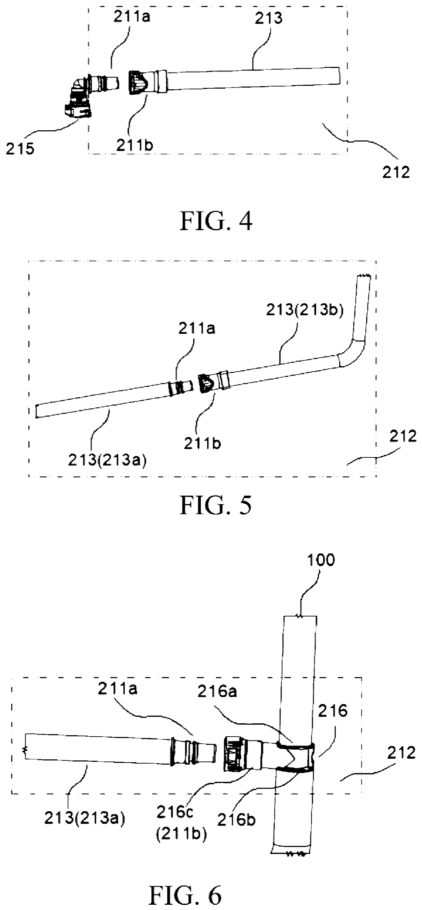

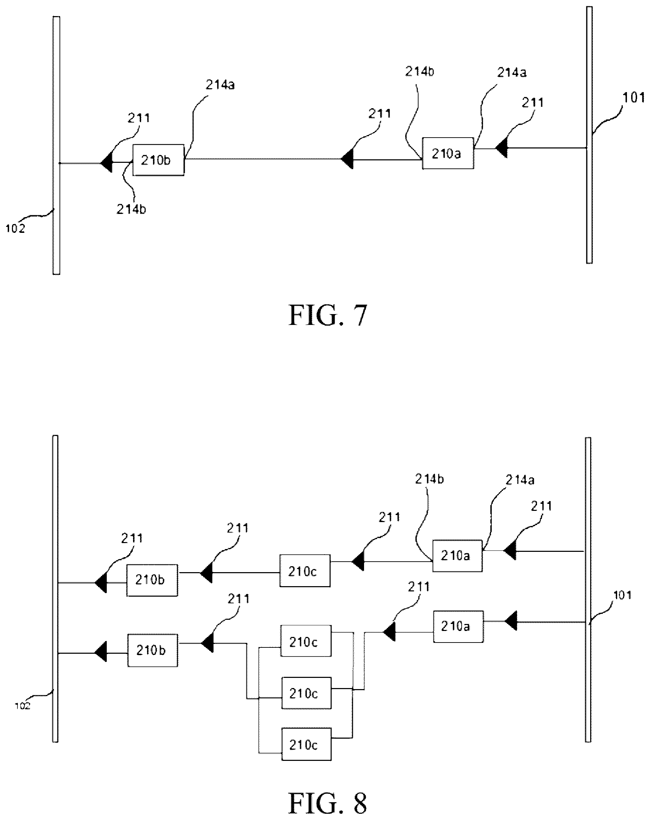

FIG. 1 is a schematic structural diagram of an energy storage system 1000 according to some embodiments of the present disclosure; FIG. 2 is a partial schematic structural diagram of an energy storage system 1000 according to some embodiments of the present disclosure; FIG. 3 is a schematic diagram of a self-sealing joint unit 212 and peripheral structures thereof according to some embodiments of the present disclosure; FIG. 4 is a schematic diagram of a self-sealing joint unit 212 and peripheral structures thereof according to some embodiments of the present disclosure; FIG. 5 is a schematic diagram of a self-sealing joint unit 212 and peripheral structures thereof according to some embodiments of the present disclosure; FIG. 6 is a schematic diagram of a self-sealing joint unit 212 and peripheral structures thereof according to some embodiments of the present disclosure; FIG. 7 is a partial schematic structural diagram of an energy storage system according to some embodiments of the present disclosure; and FIG. 8 is a partial schematic structural diagram of an energy storage system according to some embodiments of the present disclosure.

As shown in FIG. 1 and FIG. 2, some embodiments of the present disclosure provide an energy storage system 1000. The energy storage system 1000 includes a main heat exchange medium pipeline 100, a heat exchange unit 210, a self-sealing joint unit 212, and at least one battery. The battery includes at least one battery cell (not shown in the figure). The heat exchange unit 210 is configured to exchange heat with the battery cell, and the heat exchange unit 210 is provided with a heat exchange medium port 214 for a heat exchange medium to enter or exit. The heat exchange medium port 214 is in communication with the main heat exchange medium pipeline 100 via the self-sealing joint unit 212.

As shown in FIG. 1, the battery in the energy storage system 1000 is described by taking a battery pack 201 as an example.

The main heat exchange medium pipeline 100 is formed as a flow path of the heat exchange medium, and may be divided into a heat exchange medium supply pipeline 101 and a heat exchange medium return pipeline 102 based on a flow direction of the heat exchange medium. The main pipeline is described relative to each heat exchange unit 210 that the heat exchange medium flow through. The heat exchange medium supply pipeline 101 is located on the most upstream side relative to all heat exchange units 210 to which the heat exchange medium supply pipeline supplies the heat exchange medium. The heat exchange medium return pipeline 102 is located on the most downstream side relative to all heat exchange units 210 from which the heat exchange medium return pipeline recovers the heat exchange medium.

Herein, it should be noted that arrangement positions of the heat exchange medium supply pipeline 101 and the heat exchange medium return pipeline 102 relative to the heat exchange units 210 are not particularly limited. However, in some embodiments, as shown in FIG. 1 and FIG. 2, for ease of centralized operations from one side of the energy storage system (e.g., an energy storage container), the heat exchange medium supply pipeline 101 and the heat exchange medium return pipeline 102 are arranged on the same side relative to the heat exchange units 210. Certainly, as shown in FIG. 7 and FIG. 8, the heat exchange medium supply pipeline and the heat exchange medium return pipeline may alternatively be located on both sides of the connected heat exchange units 210. In addition, the material of the main heat exchange medium pipeline 100 may be a metal or resin. Certainly, another suitable material may alternatively be used.

In addition, in the embodiments shown in FIG. 1, the heat exchange medium flowing in the main heat exchange medium pipeline 100 is a liquid coolant for cooling a battery cell in the battery pack 201. As shown in FIG. 1, three sets of heat exchange medium supply pipelines 101 and heat exchange medium return pipelines 102 are shown, and each set of heat exchange medium supply pipeline 101 and heat exchange medium return pipeline 102 is separately connected to a liquid cooling set P through a pipeline L. The heat exchange medium cooled by the liquid cooling set P flows into each heat exchange medium supply pipeline 101 through the pipeline L, and the heat exchange medium subject to heat exchange returns from each heat exchange medium return pipeline 102 and enters the liquid cooling set P again through the pipeline L for cooling, so that circulation of the heat exchange medium is formed. It should be understood that, "three sets" herein is only an example, and is not intended to limit the numbers of the heat exchange medium supply pipelines 101 and the heat exchange medium return pipelines 102. In addition, the pipeline L and the liquid cooling set P in FIG. 1 are elements schematically shown for describing the embodiments, and are not intended to limit actual structures thereof. In addition, FIG. 1 shows three sets of heat exchange medium supply pipelines 101 and heat exchange medium return pipelines 102 sharing one pipeline L in parallel. However, alternatively, each set of heat exchange medium supply pipeline 101 and heat exchange medium return pipeline 102 may be individually connected to the liquid cooling set P through one pipeline L (each pipeline L is independent of one another). In addition, FIG. 1 shows three sets of heat exchange medium supply pipelines 101 and heat exchange medium return pipelines 102 sharing one liquid cooling set P. However, alternatively, each set of heat exchange medium supply pipeline 101 and heat exchange medium return pipeline 102 may individually use one liquid cooling set P. The number of the liquid cooling sets P among others is not limited in the embodiments of the present disclosure, and may be selected based on a situation. In addition, in some embodiments, a heater, etc. may be additionally disposed, to implement two-way heat exchange for heating and cooling a battery cell.

The heat exchange unit 210 is configured to exchange heat with each battery cell in the battery pack 201. A specific structure and arrangement position of the heat exchange unit 210 are not particularly limited. In some embodiments, the heat exchange unit 210 may be a cooling plate provided at the bottom of the battery pack 201 and internally provided with a heat exchange medium flow channel. In some other embodiments, the heat exchange unit 210 may alternatively be a cooling plate provided at the bottom and a side of the battery pack and internally provided with a heat exchange medium flow channel, etc. Certainly, the heat exchange unit 210 is not limited to the above-described forming manners.

As shown in FIG. 1, FIG. 3, and FIG. 8, each heat exchange unit 210 is provided with a heat exchange medium port 214 for the heat exchange medium to enter or exit. Based on a flow direction of the heat exchange medium, the heat exchange medium port 214 includes a heat exchange medium inlet 214a and a heat exchange medium outlet 214b. The heat exchange medium port 214 is a general term for the heat exchange medium inlet 214a and the heat exchange medium outlet 214b. The heat exchange medium inlet 214a is a port that is provided in the heat exchange unit 210 and through which the heat exchange medium flows into the heat exchange unit 210. The heat exchange medium outlet 214b is a port that is provided in the heat exchange unit 210 and through which the heat exchange medium flows out of the heat exchange unit 210.

The self-sealing joint unit 212 shown by a dashed-line frame in FIG. 3 to FIG. 6 plays a role of a joint and implements a self-sealing effect for a flow path including the self-sealing joint unit. In other words, when the self-sealing joint unit 212 maintains a connected state as a joint, the self-sealing joint unit 212 keeps the flow path clear. When the self-sealing joint unit 212 enters a disconnected state as a joint, the self-sealing joint unit 212 blocks end portions of a disconnected pipeline to suppress the heat exchange medium from flowing out of the disconnected parts.

As shown in FIG. 1 and FIG. 3 to FIG. 6, the self-sealing joint unit 212 is provided in a flow path between the heat exchange medium port 214 of the heat exchange unit 210 and the main heat exchange medium pipeline 100. The self-sealing joint unit may be provided in a flow path between the heat exchange medium inlet 214a and the heat exchange medium supply pipeline 101, or may be provided in a flow path between the heat exchange medium outlet 214b and the heat exchange medium return pipeline 102. As shown in FIG. 1, in some embodiments, two self-sealing joint units 212 may be provided for each heat exchange unit 210 (only a self-sealing joint 211 is shown in the figure). As shown in FIG. 7 and FIG. 8, in some embodiments, adjacent heat exchange units 210 may share one self-sealing joint unit 212 (only a self-sealing joint 211 is shown in the figure). Alternatively, for several heat exchange units 210, one self-sealing joint unit 212 (only a self-sealing joint 211 is shown in the figure) may be provided on each of the most upstream side and the most downstream side of the heat exchange units 210. Therefore, for each heat exchange unit 210, the heat exchange medium port 214 is in communication with the main heat exchange medium pipeline 100 via the self-sealing joint unit 212. Certainly, some self-sealing joint units 212 may alternatively be omitted as appropriate. For example, in FIG. 7, a self-sealing joint unit (only a self-sealing joint 211 is shown in the figure) between a heat exchange unit 210a and a heat exchange unit 210b may be omitted. Instead, a pipeline is used for communication between the heat exchange unit 210a and the heat exchange unit 210b. In this case, when the heat exchange unit 210a and the heat exchange unit 210b are removed as one whole heat exchange unit string, a self-sealing joint unit on an upstream side of the heat exchange unit 210a and a self-sealing joint unit on a downstream side of the heat exchange unit 210b may also be used to realize self-sealing for disconnected pipeline parts.

As the heat exchange medium port 214 of the heat exchange unit 210 is in communication with the main heat exchange medium pipeline 100 via the self-sealing joint unit 212, the self-sealing joint unit 212 can be mainly operated when the heat exchange unit 210 is disconnected from the main heat exchange medium pipeline 100. In addition, due to a self-sealing effect of the self-sealing joint unit 212, the heat exchange medium does not flow out from a side of the heat exchange unit 210 and a side of the main heat exchange medium pipeline 100. Therefore, when the battery pack together with the heat exchange unit 210 that cools the battery pack (also referred to as "heat exchange unit 210 to be removed") has to be removed from the energy storage system for repair, replacement, transportation, etc., the heat exchange unit 210 to be removed and a heat exchange unit 210 in communication with the heat exchange unit 210 to be removed, and even the heat exchange medium in the entire battery cluster do not have to be removed in a time-consuming and labor-intensive manner as in a conventional method. Instead, the self-sealing joint unit 212 connected to the heat exchange medium port 214 of the heat exchange unit 210 to be removed may be used to seal the heat exchange medium inside the heat exchange unit 210 to be removed. At the same time, the self-sealing joint unit 212 also seals a disconnected part of a pipeline adjacent to the heat exchange unit 210 to be removed, and the heat exchange medium in a pipeline other than that of the heat exchange unit 210 to be removed hardly flows out from the disconnected part. Therefore, as there is little leakage of the heat exchange medium, a work step of discharging the heat exchange medium in the heat exchange unit 210 can be omitted, and a work step of refilling the heat exchange medium into a remounted heat exchange unit 210 can also be omitted, thereby simplifying the operations. In addition, the time required for removal and mounting work comprising discharging and refilling the heat exchange medium is also greatly reduced. Moreover, during transportation of the energy storage system 1000 such as an energy storage container, some battery packs 201 and heat exchange units 210 may be disassembled from the energy storage container by a simple and easy operation of disconnecting the self-sealing joint unit 212, thereby reducing an overall transport weight and easily resolving a problem of difficult transportation caused by the energy storage container exceeding a load limit of a transport means.

In some embodiments, as shown in FIG. 3 to FIG. 6, the self-sealing joint unit 212 includes a self-sealing joint 211 and a branch pipeline connected to the self-sealing joint 211.

Herein, the self-sealing joint 211 and the branch pipeline connected thereto are referred to as the self-sealing joint unit 212. Herein, the branch pipeline is described relative to the main heat exchange medium pipeline 100, includes a branch pipe that implements communication between the main heat exchange medium pipeline 100 and the heat exchange unit 210, and further includes a branch pipe that forms a flow path between adjacent heat exchange units 210. The branch pipeline may be connected to the main heat exchange medium pipeline 100 through a joint, etc. The branch pipeline may be a rigid pipe that is not flexible, a flexible pipe that can be flexed, or a hose. The material of the branch pipeline may be resin. The branch pipeline may be connected to the main heat exchange medium pipeline 100 in a hot-melt connection manner.

As the self-sealing joint unit 212 includes the self-sealing joint 211 and the branch pipeline connected to the self-sealing joint, the flexibility in a mounting position of the self-sealing joint can be improved, and an operation space around the self-sealing joint can be further adjusted by using the length, orientation, etc. of the branch pipeline to facilitate operations.

In some embodiments, the self-sealing joint 211 includes a first joint 211a and a second joint 211b that are connectable to and separable from each other, and is formed to allow the heat exchange medium to pass through when the first joint 211a and the second joint 211b are connected to each other, and the first joint 211a and the second joint 211b separately block the heat exchange medium when the first joint 211a and the second joint 211b are separated from each other.

The self-sealing joint 211 includes the first joint 211a and the second joint 211b that are connectable to and separable from each other. When the first joint 211a and the second joint 211b enter a mutually-connected state, a communication cavity is formed inside the first joint and the second joint to allow the heat exchange medium to flow through smoothly. When the first joint 211a and the second joint 211b enter a mutually-disconnected state, the first joint 211a and the second joint 211b separately block the ends of a pipeline including the first joint and the second joint, thereby suppressing the outflow of the heat exchange medium. When two adjacent heat exchange units 210 share one self-sealing joint 211, the first joint 211a of the shared self-sealing joint 211 and the second joint 211b adapted to the first joint 211a are each connected to one heat exchange unit 210.

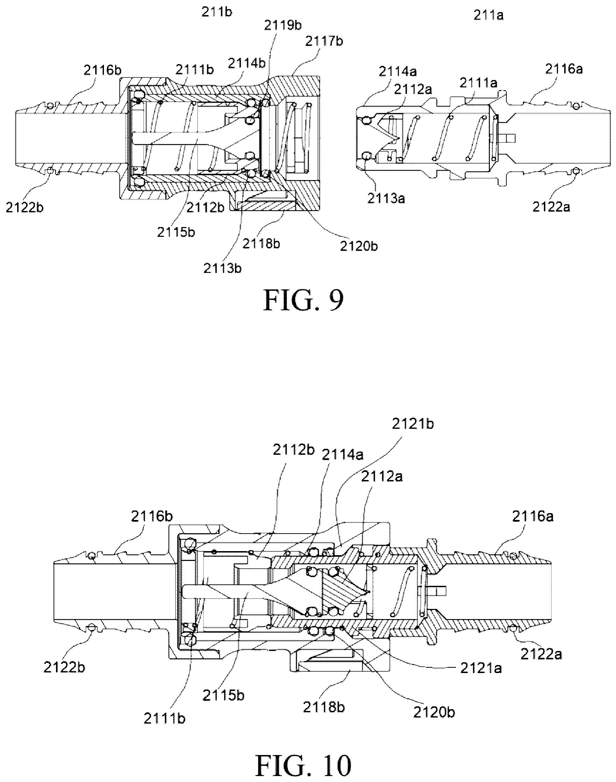

The self-sealing joint 211 may be made of a metal material or a plastic material. Alternatively, another material may be selected when a basic function of the self-sealing joint is met. The structure of the self-sealing joint 211 is not particularly limited, provided that a joint function and a self-sealing function upon disconnection can be realized. A specific example of the structure of the self-sealing joint 211 is described below with reference to FIG. 9 and FIG. 10.

Therefore, operations are simple, as the first joint 211a and the second joint 211b of the self-sealing joint 211 can be switched, through connection and separation, between a state in which the heat exchange medium is allowed to pass through and a state in which the heat exchange medium is separately blocked.

In some embodiments, as shown in FIG. 9 and FIG. 10, either of the first joint 211a and the second joint 211b is an inserting-end joint, and the other is a receiving-end joint. The self-sealing joint 211 is formed to allow the heat exchange medium to flow through in a state in which the inserting-end joint is inserted into the receiving-end joint, and the inserting-end joint and the receiving-end joint separately block the heat exchange medium from flowing through in a state in which the inserting-end joint and the receiving-end joint are separated from each other.

FIG. 9 is a schematic cross-sectional diagram of a disconnected state of a self-sealing joint 211 according to some embodiments of the present disclosure; and FIG. 10 is a schematic cross-sectional diagram of a connected state of a self-sealing joint 211 according to some embodiments of the present disclosure. The following describes the structures of the inserting-end joint and the receiving-end joint in detail with reference to FIG. 9 and FIG. 10.

In the embodiments shown in FIG. 9 and FIG. 10, the first joint 211a serves as the inserting-end joint (also referred to as a "male end"), and the second joint 211b serves as the receiving-end joint (also referred to as a "female end").

As shown in FIG. 9, the first joint 211a serving as the inserting-end joint includes a first valve core spring 2111a, a first valve core 2112a, a first valve core sealing ring 2113a, a first valve body 2114a, and a first joint terminal 2116a. In a state shown in FIG. 8, the first valve core 2112a is provided in the first valve body 2114a and is arranged to be slidable relative to the first valve body 2114a, the first valve core sealing ring 2113a is sleeved on the first valve core 2112a, and the first valve core spring 2111a is provided between the first valve body 2114a and the first valve core 2112a and is arranged to apply a pressing force to the first valve core 2112a. In this way, the first valve core 2112a is pressed against a port of the first valve body 2114a, and the first valve core sealing ring 2113a seals a gap between the first valve core 2112a and the first valve body 2114a.

The first joint terminal 2116a is configured for connection to the heat exchange medium port 214 or a branch pipeline 213, etc. A connection manner may be interference-fit connection, hot-melt connection, welding, or snap-fit connection, etc. In a specific example, for example, the branch pipeline 213 sleeved on a periphery of the first joint terminal 2116a may be enabled to implement interference fit with the first joint terminal 2116a, thereby achieving a reliable connection. In addition, as shown in FIG. 9, a protrusion that protrudes radially outward is further provided on the periphery of the first joint terminal 2116a, and therefore a force of fitting with the branch pipeline 213 can be further increased. As shown in FIG. 9, a first terminal sealing ring 2122a is further sleeved on the periphery of the first joint terminal 2116a, to implement sealing between the first joint terminal 2116a and the branch pipeline 213 (not shown in FIG. 9) connected to the terminal.

As shown in FIG. 9, the second joint 211b serving as the receiving-end joint includes a second valve core spring 2111b, a second valve core 2112b, a second valve core sealing ring 2113b, a second valve body 2114b, a valve rod 2115b, a second joint terminal 2116b, a second joint sleeve 2117b, an operating rod 2118b, a valve rod sealing ring 2119b, and a second valve core end sealing ring 2120b. In a state shown in FIG. 9, the second valve core 2112b is provided in the second valve body 2114b and is arranged to be slidable relative to the second valve body 2114b, the second valve core spring 2111b is provided between the second valve core 2112b and the second valve body 2114b, one end of the second valve core spring 2111b is connected to an outer peripheral surface of the second valve core 2112b, the other end thereof abuts against an end face of the second joint terminal 2116b that faces a side of the second valve body 2114b, and the second valve core 2112b abuts against a port of the second valve body 2114b under the action of a pressing force of the second valve core spring 2111b. An annular groove is provided on an inner peripheral surface near the port of the second valve body 2114b, and the second valve core sealing ring 2113b is mounted in the annular groove. The second valve core sealing ring 2113b seals a gap between the second valve core 2112b and the second valve body 2114b. The second valve core 2112b further encloses the valve rod 2115b, and the valve rod 2115b is fixedly mounted relative to the second valve body 2114b and the second joint terminal 2116b. The valve rod sealing ring 2119b is sleeved on the valve rod 2115b, and the valve rod sealing ring 2119b seals a gap between the valve rod 2115b and the second valve core 2112b that abuts against the port of the second valve body 2114b.

The second joint terminal 2116b is configured for connection to the heat exchange medium port 214 or the branch pipeline 213, etc. A connection manner may be interference-fit connection, hot-melt connection, welding, or snap-fit connection, etc. In a specific example, for example, the branch pipeline 213 sleeved on a periphery of the second joint terminal 2116b may be enabled to implement interference fit with the second joint terminal 2116b, thereby achieving a reliable connection. In addition, as shown in FIG. 9, a protrusion that protrudes radially outward is further provided on the periphery of the second joint terminal 2116b, and therefore a force of fitting with the branch pipeline 213 can be further increased. As shown in FIG. 9, a second terminal sealing ring 2122b is further sleeved on the periphery of the second joint terminal 2116b, to implement sealing between the second joint terminal 2116b and the branch pipeline 213 (not shown in FIG. 9) connected to the terminal.

In addition, the second joint sleeve 2117b is sleeved on a periphery of the second valve body 2114b, and an annular protrusion 2121b facing radially inward is provided on an inner peripheral surface of the second joint sleeve 2117b, in order to implement, in a state shown in FIG. 10, snap fit with an annular projection 2121a facing radially outward that is provided on an outer peripheral surface of the first valve body 2114a, thereby limiting the length of the first valve body 2114a that is inserted into the second valve body 2114b.

The second valve core end sealing ring 2120b is mounted between an end of the second valve body 2114b and the annular protrusion of the second joint sleeve 2117b, and the second valve core end sealing ring 2120b is configured to seal a gap between the first valve body 2114a and the second valve body 2114b.

As shown in FIG. 10, in a state in which the first joint 211a is inserted into the second joint 211b, the first valve body 2114a of the first joint 211a pushes the second valve core 2112b of the second joint 211b to abut against the second valve core spring 2111b, so as to move in a direction of compressing the second valve core spring 2111b. In this way, the first valve body 2114a of the first joint 211a is inserted into the second joint sleeve 2117b and is located among the second valve core sealing ring 2113b, the second valve core end sealing ring 2120b, and the valve rod 2115b. Since there is a gap between an inner peripheral surface of the first valve body 2114a and an outer peripheral surface of the valve rod 2115b, the first joint 211a and the second joint 211b form a structure in which inner cavities thereof are in communication with each other.

In addition, the operation rod 2118b is configured to release snap-fit locking between the first joint 211a and the second joint 211b. For example, the snap fit between the second joint sleeve 2117b and the first valve body 2114a can be released by pressing the operation rod 2118b radially inward. In this way, the first joint 211a can be pulled out from the second joint 211b. In addition, a person of ordinary skill in the art can see that a cross section shown in FIG. 9 and a cross section shown in FIG. 10 are not cross-sections at the same position. In addition, some structural details are omitted in both FIG. 9 and FIG. 10.

As described above, as the self-sealing joint has a simple structure and the first joint 211a and the second joint 211b can be connected to and disconnected from each other by insertion and removal, operations are simple, thereby helping reduce the work time required for removal and mounting and helping improve the work efficiency.

In some embodiments, the branch pipeline 213 includes a pipeline formed by a flexible pipe.

The flexible pipe generally refers to a pipe that can be bent but has a shape-retention property, e.g., a pipe that can be bent by an external force and retain a bent shape. Examples of the flexible pipe include a stainless steel pipe, an aluminum alloy pipe, a plastic pipe, etc.

Therefore, the self-sealing joint 211 may be connected to the main heat exchange medium pipeline 100 and/or the heat exchange medium port 214 of the heat exchange unit 210 through the flexible pipe. As the flexible pipe can be bent and retain a bent shape, the flexibility in mounting positions of the heat exchange unit 210, the self-sealing joint 211, etc. can be greatly improved; an arrangement position of the heat exchange unit 210 can be adapted in a relatively large space range by designing the shape, length, etc. of the flexible pipe; and a relatively large space can be reserved between the heat exchange unit 210 and the main heat exchange medium pipeline 100 and between adjacent heat exchange units 210 to facilitate operations.

In some embodiments, as shown in FIG. 3, the first joint 211a is integrated into the heat exchange medium port 214 of the heat exchange unit 210; the second joint 211b is mounted at one end of the branch pipeline 213; and the other end of the branch pipeline 213 is connected to the main heat exchange medium pipeline 100.

FIG. 3 shows a partial schematic structural diagram of the battery pack 201. As shown in FIG. 3, the first joint 211a being integrated into the heat exchange medium port 214 of the heat exchange unit 210 means that the first joint 211a and the heat exchange medium port 214 are connected to each other to form an integrated member, and this integrated member functions as both the heat exchange medium port and the first joint.

In addition, the heat exchange medium port 214 shown in FIG. 3 may be the heat exchange medium inlet 214a or the heat exchange medium outlet 214b. When the heat exchange medium port 214 is the heat exchange medium inlet 214a, the branch pipeline 213 having one end connected to the second joint 211b is connected to the heat exchange medium supply pipeline 101 at the other end. When the heat exchange medium port 214 is the heat exchange medium outlet 214b, the other end of the branch pipeline 213 is connected to the heat exchange medium return pipeline 102. The connection between the branch pipeline 213 and the main heat exchange medium pipeline 100 may be as follows: the branch pipeline 213 continuously extends to the vicinity of the main heat exchange medium pipeline 100 and is connected thereto, or the branch pipeline 213 is connected to the main heat exchange medium pipeline 100 through another heat exchange unit 210 and/or another intermediate flow path.

For the self-sealing joint 211 shown in FIG. 3, a worker can connect or disconnect the self-sealing joint 211 simply by holding the second joint 211b by hand or using a tool to clamp the second joint to perform a connection or separation operation relative to the first joint 211a. When the self-sealing joint 211 is disconnected, the heat exchange medium port 214 of the heat exchange unit 210 enters a closed state because the first joint 211a is integrated into the heat exchange medium port. The second joint 211b closes an end of the branch pipeline 213.

In addition, the heat exchange unit 210 has two heat exchange medium ports 214, and the first joint 211a may be integrated into each of the two heat exchange medium ports 214, or the first joint 211a may be integrated into only one of the two heat exchange medium ports 214.

As the first joint 211a of the self-sealing joint 211 can be integrated into the heat exchange medium port 214 of the heat exchange unit 210, the number of parts can be reduced, and a mounting work step can be accordingly reduced. In addition, it is convenient to fix a position of the self-sealing joint 211, and a pipeline, etc. arranged in a space around the heat exchange unit 210 can also be reduced. In addition, as the second joint 211b is connected to the main heat exchange medium pipeline 100 through the branch pipeline 213, the flexibility of the mounting position of the heat exchange unit 210 can be improved, and it is also convenient to reserve an operation space between the heat exchange unit 210 and the main heat exchange medium pipeline 100 and between adjacent heat exchange units 210, etc. to facilitate operations.

In some embodiments, as shown in FIG. 3, the self-sealing joint unit 212 further includes a quick-connection joint 215, and the first joint 211a is mounted to the heat exchange medium port 214 of the heat exchange unit 210 via the quick-connection joint 215; the second joint 211b is mounted at one end of the branch pipeline 213; and the other end of the branch pipeline 213 is connected to the main heat exchange medium pipeline 210.

As shown in FIG. 3, the quick-connection joint 215 is mounted to the heat exchange medium port 214, the first joint 211a is mounted on the quick-connection joint 215, and the second joint 211b is connected to the branch pipeline 213. The quick-connection joint 215 may be a joint that can connect or disconnect a pipeline without using a tool, for example, may have a joint structure that can be connected to and snap fit with a peer joint simply through an insertion operation, and may be made of a metal material or a resin material. A specific form of the quick-connection joint 215 is not particularly limited. As an example, as shown in FIG. 3, the quick-connection joint 215 may have an elbow. By employing such a quick-connection joint, it is convenient to adjust the positions of the first joint 211a and the second joint 211b connected thereto, which improves the layout flexibility. Moreover, it is easy to reserve an operation space around the first joint 211a and the second joint 211b connected thereto.

In addition, both of the two heat exchange medium ports 214 of the heat exchange unit 210 can employ a structure shown in FIG. 4 in which the first joint 211a is mounted to the heat exchange medium port 214 via the quick-connection joint 215. Alternatively, one of the two heat exchange medium ports 214 may employ the joint shown in FIG. 4, while the other thereof may employ a structure shown in FIG. 3 in which the first joint 211a is integrated into the heat exchange medium port 214.

As the first joint 211a of the self-sealing joint 211 is mounted to the heat exchange medium port 214 of the heat exchange unit 210 via the quick-connection joint 215, the mounting reliability and the removal and mounting convenience of the first joint 211a relative to the heat exchange medium port 214 of the heat exchange unit 211 can be improved. Specifically, as the first joint 211a is mounted to the heat exchange medium port 214 via the quick-connection joint 215, the quick-connection joint 215 can provide protection for the heat exchange medium port 214, so as to prevent risks such as breakage, wear, and poor sealing of the heat exchange medium port 214 from increasing due to repeated connection and disconnection of the first joint 211a.

In some embodiments, as shown in FIG. 5, the branch pipeline 213 includes a first branch pipeline 213a and a second branch pipeline 213b, and the first joint 211a is connected to the heat exchange medium port 214 of the heat exchange unit 210 via the first branch pipeline 213a; and the second joint 211b is connected to the main heat exchange medium pipeline 100 via the second branch pipeline 213b.

As shown in FIG. 4, the first joint 211a and the second joint 211b of the self-sealing joint may be connected to the main heat exchange medium pipeline 100 through the branch pipelines, respectively. The first branch pipeline 213a and the second branch pipeline 213b may form a pipeline between the self-sealing joint 211 and the main heat exchange medium pipeline 100, or may form a pipeline between two adjacent heat exchange units 210.

As the first joint 211a and the second joint 211b are both connected through the branch pipeline 213, the flexibility in the mounting position of the self-sealing joint 211, etc. can be greatly improved; the arrangement position of the heat exchange unit 210 can be adapted in a relatively large space range by designing the shape, length, etc. of the branch pipeline 213; and a relatively large space can be reserved between the heat exchange unit 210 and the main heat exchange medium pipeline 100 and between the heat exchange units 210 to facilitate operations.

In some embodiments, as shown in FIG. 5, the second branch pipeline is formed by a three-way joint 216 having a first port 216a, a second port 216b, and a third port 216c, the first port 216a and the second port 216b are connected to the main heat exchange medium pipeline 100, and the second joint 211b of the self-sealing joint 211 is integrated into the third port 216c of the three-way joint 216.

As shown in FIG. 6, the second branch pipeline may also be formed by a three-way joint 216. The first port 216a and the second port 216b of the three-way joint 216 are connected to the main heat exchange medium pipeline 100 by, e.g., hot-melt connection, the third port 216c extends outward relative to the main heat exchange medium pipeline 100, and the second joint 211b of the self-sealing joint 211 is integrated into the third port 216c. The self-sealing joint 211 can be connected or separated simply by connecting or separating the first joint 211a relative to the third port 216c into which the second joint 211b is integrated. When the first joint 211a is disconnected from the second joint 211b, the second joint 211b plays a self-sealing effect to close the third port 216c of the three-way joint 216. In this way, the heat exchange medium in the main heat exchange medium pipeline 100 flows in the pipeline without flowing out from the three-way joint 216.

As the second branch pipeline is formed by the three-way joint 216 connected to the main heat exchange medium pipeline 100 and the second joint 211b of the self-sealing joint 211 is integrated into the three-way joint 216, the number of parts can be reduced. In addition, it is convenient to fix a position of the self-sealing joint 211, and a pipeline, etc. arranged in a space around the main heat exchange medium pipeline 100 can also be reduced.

In addition, in an energy storage system including a plurality of heat exchange units 210, all self-sealing joint units may employ any type of the self-sealing joint units 212 shown in FIG. 3 to FIG. 6, or may employ two or more types of these self-sealing joint units in a hybrid manner. Two heat exchange medium ports 214 of the same heat exchange unit 210 may employ any type of the self-sealing joint units 212 shown in FIG. 3 to FIG. 6, or may use these self-sealing joint units in a hybrid manner. The self-sealing joint units 212 shown in FIG. 3 to FIG. 6 may be selected based on a specific situation.

In some embodiments, as shown in FIG. 1, FIG. 2, FIG. 7, and FIG. 8, the main heat exchange medium pipeline 100 includes a main heat exchange medium supply pipeline 101 and a main heat exchange medium return pipeline 102, the heat exchange medium port 214 of the heat exchange unit 210 includes a heat exchange medium inlet 214a and a heat exchange medium outlet 214b, the heat exchange medium inlet 214a is in communication with the main heat exchange medium supply pipeline 101 through the self-sealing joint unit 212, and the heat exchange medium outlet 214b is in communication with the main heat exchange medium return pipeline 102 through the self-sealing joint unit 212.

As the self-sealing joint unit 212 is separately provided between the heat exchange medium inlet 214a and the main heat exchange medium supply pipeline 101 and between the heat exchange medium outlet 214b and the main heat exchange medium return pipeline 102, when the heat exchange unit 210 is removed and mounted for temporarily removing or replacing a battery pack, the self-sealing joint on a side of the heat exchange medium inlet 214a and the self-sealing joint on a side of the heat exchange medium outlet 214b can be operated separately, and the heat exchange medium inside the heat exchange unit 210 to be removed and the heat exchange medium in the main heat exchange medium supply pipeline 101 and the main heat exchange medium return pipeline 102 may not be discharged. Therefore, the operations are simple. Moreover, for the heat exchange unit 210 to be removed, the heat exchange medium can be blocked from both the inlet side and the outlet side of the heat exchange unit to be removed, thereby reducing the risk of heat exchange medium leakage.

In some embodiments, as shown in FIG. 7, a plurality of heat exchange units 210 are provided, the plurality of heat exchange units 210 include a first heat exchange unit 210a and a second heat exchange unit 210b, the first heat exchange unit 210a and the second heat exchange unit 210b are arranged to communicate with each other in such a manner that the heat exchange medium sequentially flows through the heat exchange medium inlet 214a of the first heat exchange unit 210a, the heat exchange medium outlet 214b of the first heat exchange unit 210a, the heat exchange medium inlet 214a of the second heat exchange unit 210b, and the heat exchange medium outlet 214b of the second heat exchange unit 210b. The heat exchange medium inlet 214a of the first heat exchange unit 210a is connected to the heat exchange medium supply pipeline 101 through the self-sealing joint unit, and the heat exchange medium outlet 214b of the second heat exchange unit 210b is connected to the heat exchange medium return pipeline 102 through the self-sealing joint unit.

As shown in FIG. 7, in the energy storage system, the plurality of heat exchange units 210 may be connected in series. In this case, the self-sealing joint unit (the self-sealing joint 211) may be configured for each heat exchange unit 210, as shown in FIG. 7. Alternatively, one or several self-sealing joints 211 shown in FIG. 7 may be omitted. For example, the self-sealing joint 211 located between the first heat exchange unit 210a and the second heat exchange unit 210b in FIG. 7 may be omitted. Instead, a pipeline may be used for communication between the heat exchange medium outlet 214b of the first heat exchange unit 210a and the heat exchange medium inlet 214a of the second heat exchange unit 210b. Properly reducing a self-sealing joint helps reduce resistance in a flow path.

After the self-sealing joint 211 located between the first heat exchange unit 210a and the second heat exchange unit 210b in FIG. 7 is omitted, when one heat exchange unit in a heat exchange unit string including the first heat exchange unit 210a and the second heat exchange unit 210b in FIG. 7 is to be removed, the self-sealing joint 211 closest to the heat exchange unit 210 to be removed may be first disconnected. For example, the self-sealing joint 211 on a side of the heat exchange medium inlet of the first heat exchange unit 210a and the self-sealing joint 211 on a side of the heat exchange medium outlet of the second heat exchange unit 210b in FIG. 7 are disconnected, and the first heat exchange unit 210a and the second heat exchange unit 210b are removed as a whole from the energy storage system. In this case, the heat exchange medium can be discharged only for the removed heat exchange unit string. Compared with a case of discharging the heat exchange medium for heat exchange units in the entire battery cluster, the present disclosure greatly reduces the time required for discharging the heat exchange medium and also reduces a discharge amount and refilling amount of the heat exchange medium.

In addition, the first heat exchange unit 210a and the second heat exchange unit 210b may be temporarily removed from the energy storage system for weight reduction. In this case, the heat exchange medium in the first heat exchange unit 210a and the second heat exchange unit 210b does not need to be discharged.

Therefore, two or more heat exchange units 210 may be connected in series. If several heat exchange units 210 are connected in series, the self-sealing joint unit may be provided at each of the heat exchange medium inlet 214a of the most upstream heat exchange unit and the heat exchange medium outlet 214b of the most downstream heat exchange unit in the heat exchange unit string. In this way, compared with a conventional case, the number of self-sealing joints used can be reduced while the discharge amount of the heat exchange medium is suppressed and the work time is accordingly reduced, thereby helping reduce system flow resistance and further helping reduce the number of parts and a corresponding weight.

In some embodiments, as shown in FIG. 8, the plurality of heat exchange units further include at least one third heat exchange unit 210c. The first heat exchange unit 210a, the third heat exchange unit 210c, and the second heat exchange unit 210b are arranged to communicate with one another in such a manner that the heat exchange medium sequentially flows through the heat exchange medium inlet 214a of the first heat exchange unit 210a, the heat exchange medium outlet 214b of the first heat exchange unit 210a, the heat exchange medium inlet 214a of the third heat exchange unit 210c, the heat exchange medium outlet 214b of the third heat exchange unit 210c, the heat exchange medium inlet 214a of the second heat exchange unit 210b, and the heat exchange medium outlet 214b of the second heat exchange unit 210b. The heat exchange medium inlet 214a of the first heat exchange unit 210a is connected to the heat exchange medium supply pipeline 101 through the self-sealing joint unit (the self-sealing joint 211 shown in FIG. 8), and the heat exchange medium outlet 214b of the second heat exchange unit 210b is connected to the heat exchange medium return pipeline 102 through the self-sealing joint unit (the self-sealing joint 211 shown in FIG. 8).

As shown in FIG. 8, in the energy storage system, three or more heat exchange units 210 may be connected in series. In this case, as shown in FIG. 8, the self-sealing joint unit (the self-sealing joint 211) may be configured for each heat exchange unit 210, or one or several self-sealing joints 211 shown in FIG. 7 may be omitted. Reducing a self-sealing joint helps reduce resistance in a flow path.

In addition, as shown in FIG. 8, in some embodiments, several heat exchange units 210 connected in series may also include some heat exchange units connected in parallel, and such a serial-parallel hybrid connection manner is one manner for hybrid connection. In the embodiments shown in FIG. 8, a plurality of third heat exchange units 210c connected in parallel share the self-sealing joint 211 at each of the end/side of the heat exchange medium inlet and the end/side of the heat exchange medium outlet. In addition, FIG. 8 schematically shows the first heat exchange unit 210a, the second heat exchange unit 210b, and the third heat exchange unit 210c, and further schematically shows an example having one or three third heat exchange units 210c. However, a person of ordinary skill in the art knows that the number of heat exchange units herein is only used to schematically illustrate the embodiments, and is not intended to limit the specific number of heat exchange units in the embodiments, and the specific number of heat exchange units may be specifically designed based on a scale of the energy storage system, the number of battery packs, etc.

Therefore, if several heat exchange units are connected in series, the self-sealing joint unit 212 may be provided at each of the heat exchange medium inlet 214a of the most upstream heat exchange unit and the heat exchange medium outlet 214b of the most downstream heat exchange unit in the heat exchange unit string, so that the self-sealing joint units 212 on the most upstream side and the most downstream side can be operated during removal and mounting. In this way, compared with a conventional case, the number of self-sealing joints used can be reduced while the discharge amount of the heat exchange medium is suppressed and the work time is accordingly reduced, thereby helping reduce system flow resistance.

In addition, there may be a plurality of heat exchange units 210 between the most upstream heat exchange unit and the most downstream heat exchange unit in the heat exchange unit string, and the heat exchange units may be connected in series, in parallel, or in a series-parallel hybrid manner. This can improve the arrangement flexibility of the heat exchange units 210. In addition, whether the whole or a part of the heat exchange unit string is removed may be selected based on a specific situation.

In some embodiments, as shown in FIG. 1, the plurality of heat exchange units include a plurality of fourth heat exchange units 210d, the heat exchange medium inlets 214a of the fourth heat exchange units 210d are separately connected to the heat exchange medium supply pipeline 101 in parallel through the self-sealing joint unit (the self-sealing joint 211 shown in the figure), and the heat exchange medium outlets of the fourth heat exchange units 210d are separately connected to the heat exchange medium return pipeline 102 in parallel through the self-sealing joint unit (the self-sealing joint 211 shown in the figure).

FIG. 1 shows the fourth heat exchange units 210d being respectively connected to the heat exchange medium supply pipeline 101 and the heat exchange medium return pipeline 102 via the self-sealing joint units (the self-sealing joints 211 shown in the figure). However, another flow path or another component having a flow path, e.g., another heat exchange unit may be further connected to each parallel flow path.

As several heat exchange units 210 may be connected in parallel, when a heat exchange unit is removed and mounted, it is unnecessary to perform removal and mounting operations on another heat exchange unit 210 connected in parallel, thereby helping simplify the operations, save the time for an operation including discharge of the heat exchange medium, and minimize flow blockage of the heat exchange medium in the heat exchange units 210. In addition, when some battery packs are to be removed to reduce the overall weight of the energy storage system for ease of transportation, the battery packs to be removed can be flexibly selected based on a required weight decrease.

In addition, the connection manners of the plurality of heat exchange units 210 shown in FIG. 7, FIG. 8, and FIG. 1 may be used in a hybrid manner. In addition, for the plurality of heat exchange units 210 shown in FIG. 7, FIG. 8, and FIG. 1, it is unnecessary to connect the self-sealing joint unit 212 to each heat exchange unit 210, and the self-sealing joint unit 212 may be connected to only one or some heat exchange units 210 (for example, a heat exchange unit 210 located at a position prone to easy removal and mounting). Therefore, when some battery packs and heat exchange units 210 thereof are removed for weight reduction, a risk of a weight increase caused by many self-sealing joint units 212 can be reduced. As a specific example, in three battery clusters shown in FIG. 1, each heat exchange unit 201 in each battery cluster is connected to a self-sealing joint unit. However, it is also possible that only some (e.g., one or two) of the battery clusters have each heat exchange unit 201 connected to a self-sealing joint unit, or some (e.g., one or two) of the battery clusters have some of the heat exchange units 201 connected to a self-sealing joint unit.

In some embodiments, although not shown in the figure, the heat exchange unit 210 includes a cooling plate for battery cooling, and the heat exchange medium port 214 includes a cooling plate-specific heat exchange medium port provided on the cooling plate.

In this way, the heat exchange unit can be widely used in battery cooling scenarios. Moreover, with respect to use in a battery cooling scenario, the cooling plate in a battery pack can be directly used as the heat exchange unit, so that an energy storage structure is simple and occupies less space.

In some embodiments, as shown in FIG. 2, a plurality of heat exchange units 210 are provided, and the plurality of heat exchange units 210 communicate with one another (an illustration of a connecting pipeline between the plurality of heat exchange units 210 is omitted in FIG. 2) to form a heat exchange unit assembly, the heat exchange unit assembly is provided with an assembly-specific heat exchange medium port 204 shared by the heat exchange unit assembly, and the assembly-specific heat exchange medium port is connected to an assembly-specific self-sealing joint 203.

FIG. 2 shows an energy storage system 1000 including two battery clusters 200. Heat exchange units 210 in each battery cluster 200 form a heat exchange unit assembly. As shown by the battery cluster 200 located in the upper part in FIG. 2, an assembly-specific heat exchange medium port 204 is provided for the heat exchange unit assembly in the battery cluster 200. The assembly-specific heat exchange medium port 204 may be divided into an inlet-side port and an outlet-side port. In some embodiments, the battery cluster 200 is formed as an electric cabinet, and the assembly-specific heat exchange medium ports 204 on the inlet side and the outlet side may be provided on a body of the electric cabinet. To remove the battery cluster 200 (the electric cabinet) from the system, the assembly-specific self-sealing joint 203 connected to the assembly-specific heat exchange medium port 204 simply needs to be disconnected.

FIG. 2 shows two battery clusters 200, only one of which is provided with the assembly-specific heat exchange medium port 204 and connected to the assembly-specific self-sealing joint 203. It should be understood that "two" herein is merely illustrative, and is not intended to limit the number of the battery clusters 200.

In some embodiments, the energy storage system 1000 includes a plurality of battery clusters 200, and the assembly-specific self-sealing joint 203 may configured for one or some or all of the battery clusters 200. For example, to reduce the weight of the energy storage system 1000, one battery cluster 200 may be removed from the energy storage system 1000, such that a remaining portion meets load requirements of a transport means and can be transported. The one battery cluster 200 removed may be transported separately.

In addition, the assembly-specific self-sealing joint 203 may employ the same structure as the self-sealing joint 211 shown in FIG. 9 and FIG. 10; or may include an assembly-specific first self-sealing joint and an assembly-specific second self-sealing joint (not shown in the figure), and may employ a connection manner similar to that of the first self-sealing joint 211a and the second self-sealing joint 211b shown in FIG. 3 to FIG. 6, except that in FIG. 3 to FIG. 6, the first self-sealing joint 211a is connected to the heat exchange medium port 214 of the heat exchange unit 210, whereas the assembly-specific first self-sealing joint is connected to the assembly-specific heat exchange medium port 204.

As the shared assembly-specific heat exchange medium port 204 and the assembly-specific self-sealing joint 203 can be provided for the heat exchange unit assembly, the heat exchange unit assembly can be removed and mounted as a whole unit. The operations are simple, and the heat exchange medium in the heat exchange unit assembly does not have to be discharged. Such implementation helps reduce the work time and improve the work efficiency. For example, such implementation is applicable to a scenario of removing and mounting a whole battery cluster. In the example shown in FIG. 2, the plurality of heat exchange units 210 in the battery cluster 200 may be used as a heat exchange unit assembly. When the battery cluster 200 is removed and mounted as a whole, only the assembly-specific self-sealing joint 203 needs to be operated, and it is unnecessary to operate the self-sealing joint 211 one after one for each heat exchange unit 210 in the battery cluster 200.

The following describes a specific example of the energy storage system.

In the conventional technologies, before an electrical box (for example, formed by a battery pack 201) is replaced, a liquid coolant of a whole battery cluster needs to be discharged, and the liquid coolant in a pipeline and each electrical box also needs to be fully discharged by using a pressure of a liquid cooling set. Such operations have the following problems: Throughout the replacement of the electrical box, the liquid coolant needs to discharged first and then refilled, which is time-consuming and possibly causes high replacement labor costs; after a new electrical box is used as a replacement, the entire battery cluster needs to be refilled with the liquid coolant, possibly increasing electrical box replacement costs; and the liquid cooling set needs to work during the replacement, and a working program needs to be separately complied and flashed, so that the liquid coolant in a pipeline and a single electrical box can be fully discharged under the pressure of the liquid cooling set, which is time-consuming and labor-intensive.

In a specific example of the energy storage system of the present disclosure, a self-sealing joint 211 is added between an electrical box (e.g., formed by a battery pack 201) and a pipeline, so that a liquid coolant does not leak after the electrical box is removed. The self-sealing joint 211 may be connected to the pipeline at both ends, or may be connected to the electrical box at one end. In a separated state of the self-sealing joint 211, as shown in FIG. 8, a male end (e.g., formed by the first joint 211a) of the self-sealing joint presses against the first valve core 2112a through the first valve core spring 2111a, so that the first valve core 2112a and the first valve core sealing ring 2113a are in close contact with the first valve body 2114a to achieve sealing. A female end (e.g., formed by the second joint 211b) of the self-sealing joint presses against the second valve core 2112b through the second valve core spring 2111b, so that the second valve core 2112b and the second valve core sealing ring 2113b are in close contact with the second valve body 2114b and the valve rod 2115 to implement sealing. In a combined state of the self-sealing joint 211, as shown in FIG. 9, the male end and the female end implement separation between a valve core and a valve core sealing ring by compressing a sealing spring, thereby achieving communication between the male end and the female end. The material of the self-sealing joint may be a plastic material or a metal material.

In addition, as shown in FIG. 7 and FIG. 8, when two or more electrical boxes are connected in series, only one set of self-sealing joints 211 may be used, and this set of self-sealing joints is connected in series between a liquid cooling input end of the first electrical box connected in series and a liquid cooling output end of the last electrical box connected in series. As shown in FIG. 1, when two electrical boxes are connected in parallel, the self-sealing joint 211 may be added to each electrical box for both liquid cooling output and input.

In addition, in a scenario of removing the entire electric cabinet, as shown in FIG. 2, the self-sealing joint (e.g., formed by the assembly-specific self-sealing joint 203) may be connected only to a liquid cooling inlet and a liquid cooling outlet (e.g., formed by the assembly-specific heat exchange medium port 204) of the battery cluster 200.

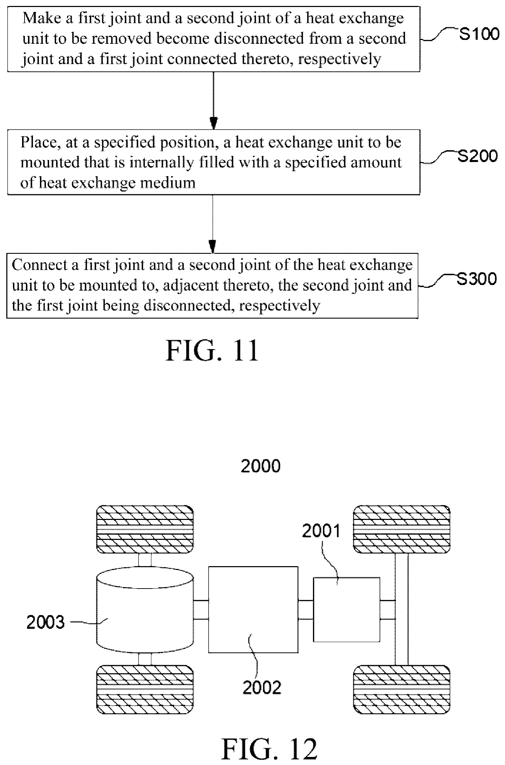

FIG. 11 is a schematic flowchart of a method for removing and mounting a heat exchange unit in an energy storage system according to some embodiments of the present disclosure. When a heat exchange unit 210 in the energy storage system provided in some embodiments of the present disclosure is to be replaced, the operation steps include the following: making a first joint and a second joint of the heat exchange unit to be removed become disconnected from a second joint and a first joint connected thereto, respectively (S100); placing, at a specified position, a heat exchange unit to be mounted that is internally filled with a specified amount of heat exchange medium (step S200), where the specified position herein may be an original position of the removed heat exchange unit, and this step may be placing another heat exchange unit at the position to replace the removed heat exchange unit (e.g., a heat exchange unit that has failed), or remounting a temporarily removed heat exchange unit at the original position; and connecting a first joint and a second joint of the heat exchange unit to be mounted to, adjacent thereto, the second joint and the first joint being disconnected, respectively (step S300). Therefore, the battery pack and the heat exchange unit thereof can be removed and mounted in a simple and quick manner.

During removal and mounting of a battery cluster, steps similar to the above operation steps are employed, except that what is to be removed is the battery cluster, and a joint subject to disconnection and reconnection is the assembly-specific self-sealing joint 203 provided for the battery cluster.

As shown in FIG. 1 and FIG. 2, some embodiments of the present disclosure further provide an energy storage module, configured as the energy storage system 1000. The energy storage system 1000 includes a main heat exchange medium pipeline 1000. The energy storage module includes a heat exchange unit 210, a self-sealing joint unit 212, and at least one battery cell (not shown in the figure). The heat exchange unit 210 is configured to exchange heat with the battery cell, the heat exchange unit 210 is provided with a heat exchange medium port 214 for a heat exchange medium to enter or exit, and the self-sealing joint unit 212 is configured to communicate the heat exchange medium port 214 with the main heat exchange medium pipeline 100.

As shown in FIG. 1, the energy storage system 1000 includes an energy storage module. The energy storage module may be a battery pack 201 together with a self-sealing joint unit 212 connected to a heat exchange medium port 214 of the battery pack, or may be a battery cluster 200 including a battery pack 201 together with a self-sealing joint unit 212 connected to a heat exchange medium port 214 of the battery pack.

Some embodiments of the present disclosure further provide an electric apparatus. The electric apparatus includes the energy storage system or the energy storage module provided in the above embodiments. A battery cell in the energy storage system or the energy storage module is configured to supply electric energy to the electric apparatus.

The electric apparatus may be an object powered by a battery in an energy storage system or a battery cell in an energy storage module, e.g., an electric device in a commercial energy storage power station, such as a server in a large data center provided with the energy storage system in the embodiments of the present disclosure; or may be an electric device in a household energy storage scenario; or may be a vehicle, vessel, aircraft, spacecraft, etc. equipped with an energy storage system or an energy storage module.

In FIG. 12, a vehicle 2000 is used as an example of the electric apparatus for description. The vehicle 2000 includes a battery 2001, a controller 2002, and a motor 2003. Herein, the battery 2001 may be the battery in the energy storage system of the embodiments of the present disclosure, or may be the battery cell in the energy storage module of the embodiments of the present disclosure. The battery 2001 supplies electric energy to the vehicle 2000, and the electric energy fully or partially provides power to the vehicle 2000.

Finally, it should be noted that the above embodiments are only for the purpose of illustrating the technical solutions of the present disclosure and are not to be construed as limiting the present disclosure. Although the present disclosure has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present disclosure, all of which shall fall within the scope of the claims and the description of the present disclosure. In particular, the technical features mentioned in the embodiments may be combined in any manner provided that there is no structural conflict. The present disclosure is not limited to the specific embodiments disclosed herein, but includes all technical solutions falling within the scope of the claims.

### Industrial applicability

The embodiments of the present disclosure provide an energy storage system, an energy storage module for the energy storage system, and an electric apparatus, which help to reduce the time required for removal and mounting operations and facilitate removal and mounting operations, and can appropriately omit the work step of discharging the heat exchange medium in the heat exchange unit, and can also omit the work step of filling the heat exchange medium into the remounted heat exchange unit, thereby simplifying the operations. In addition, the time required for removal and mounting work comprising discharging and refilling the heat exchange medium is also greatly reduced. Moreover, during transportation of an energy storage system such as an energy storage container, some batteries and heat exchange units may be removed from the energy storage container by a simple and easy operation of disconnecting the self-sealing joint unit, thereby reducing an overall transport weight and easily resolving a problem of difficult transportation caused by the energy storage container exceeding a load limit of a transport means.

## Claims

1. An energy storage system, comprising a main heat exchange medium pipeline, a heat exchange unit, a self-sealing joint unit, and at least one battery,
wherein the battery comprises at least one battery cell,
the heat exchange unit is configured to exchange heat with the battery cell, the heat exchange unit is provided with a heat exchange medium port for a heat exchange medium to enter or exit, and the heat exchange medium port is in communication with the main heat exchange medium pipeline via the self-sealing joint unit.

2. The energy storage system according to claim 1, wherein
the self-sealing joint unit comprises a self-sealing joint and a branch pipeline connected to the self-sealing joint.

3. The energy storage system according to claim 2, wherein
the self-sealing joint comprises a first joint and a second joint that are connectable to and separable from each other, and is formed to allow the heat exchange medium to pass through when the first joint and the second joint are connected to each other, and the first joint and the second joint separately block the heat exchange medium when the first joint and the second joint are separated from each other.

4. The energy storage system according to claim 3, wherein
either of the first joint and the second joint is an inserting-end joint, and the other is a receiving-end joint, and
the self-sealing joint is formed to allow the heat exchange medium to flow through in a state in which the inserting-end joint is inserted into the receiving-end joint, and the inserting-end joint and the receiving-end joint separately block the heat exchange medium from flowing through in a state in which the inserting-end joint and the receiving-end joint are separated from each other.

5. The energy storage system according to claim 3 or 4, wherein
the branch pipeline comprises a pipeline formed by a flexible pipe.

6. The energy storage system according to any one of claims 3 to 5, wherein
the first joint is integrated into the heat exchange medium port of the heat exchange unit; the second joint is mounted at one end of the branch pipeline; and the other end of the branch pipeline is connected to the main heat exchange medium pipeline.

7. The energy storage system according to any one of claims 3 to 5, wherein
the self-sealing joint unit further comprises a quick-connection joint, and the first joint is mounted to the heat exchange medium port of the heat exchange unit via the quick-connection joint; the second joint is mounted at one end of the branch pipeline; and the other end of the branch pipeline is connected to the main heat exchange medium pipeline.

8. The energy storage system according to any one of claims 3 to 5, wherein
the branch pipeline comprises a first branch pipeline and a second branch pipeline, and
the first joint is connected to the heat exchange medium port of the heat exchange unit via the first branch pipeline; and the second joint is connected to the main heat exchange medium pipeline via the second branch pipeline.

9. The energy storage system according to claim 8, wherein
the second branch pipeline is formed by a three-way joint having a first port, a second port, and a third port, the first port and the second port are connected to the main heat exchange medium pipeline, and the second joint of the self-sealing joint is integrated into the third port of the three-way joint.

10. The energy storage system according to any one of claims 1 to 9, wherein
the main heat exchange medium pipeline comprises a main heat exchange medium supply pipeline and a main heat exchange medium return pipeline,
the heat exchange medium port of the heat exchange unit comprises a heat exchange medium inlet and a heat exchange medium outlet, the heat exchange medium inlet is in communication with the main heat exchange medium supply pipeline through the self-sealing joint unit, and the heat exchange medium outlet is in communication with the main heat exchange medium return pipeline through the self-sealing joint unit.

11. The energy storage system according to claim 10, wherein
a plurality of heat exchange units are provided,
the plurality of heat exchange units comprise a first heat exchange unit and a second heat exchange unit,
the first heat exchange unit and the second heat exchange unit are arranged to communicate with each other in such a manner that the heat exchange medium sequentially flows through the heat exchange medium inlet of the first heat exchange unit, the heat exchange medium outlet of the first heat exchange unit, the heat exchange medium inlet of the second heat exchange unit, and the heat exchange medium outlet of the second heat exchange unit,
the heat exchange medium inlet of the first heat exchange unit is connected to the heat exchange medium supply pipeline through the self-sealing joint unit, and the heat exchange medium outlet of the second heat exchange unit is connected to the heat exchange medium return pipeline through the self-sealing joint unit.

12. The energy storage system according to claim 11, wherein
the plurality of heat exchange units further comprise at least one third heat exchange unit,
the first heat exchange unit, the third heat exchange unit, and the second heat exchange unit are arranged to communicate with one another in such a manner that the heat exchange medium sequentially flows through the heat exchange medium inlet of the first heat exchange unit, the heat exchange medium outlet of the first heat exchange unit, the heat exchange medium inlet of the third heat exchange unit, the heat exchange medium outlet of the third heat exchange unit, the heat exchange medium inlet of the second heat exchange unit, and the heat exchange medium outlet of the second heat exchange unit,
the heat exchange medium inlet of the first heat exchange unit is connected to the heat exchange medium supply pipeline through the self-sealing joint unit, and the heat exchange medium outlet of the second heat exchange unit is connected to the heat exchange medium return pipeline through the self-sealing joint unit.

13. The energy storage system according to any one of claims 10 to 12, wherein
the plurality of heat exchange units comprise a plurality of fourth heat exchange units,
the heat exchange medium inlets of the fourth heat exchange units are separately connected to the heat exchange medium supply pipeline in parallel through the self-sealing joint unit, and the heat exchange medium outlets of the fourth heat exchange units are separately connected to the heat exchange medium return pipeline in parallel through the self-sealing joint unit.

14. The energy storage system according to any one of claims 1 to 13, wherein
the heat exchange unit comprises a cooling plate for battery cooling, and the heat exchange medium port comprises a cooling plate-specific heat exchange medium port provided on the cooling plate.

15. The energy storage system according to any one of claims 1 to 14, wherein
a plurality of heat exchange units are provided,
the plurality of heat exchange units communicate with one another to form a heat exchange unit assembly, the heat exchange unit assembly is provided with an assembly-specific heat exchange medium port shared by the heat exchange unit assembly, and the assembly-specific heat exchange medium port is connected to an assembly-specific self-sealing joint.

16. The energy storage system according to any one of claims 2 to 15, wherein
the self-sealing joint is connected to the branch pipeline in a manner comprising interference-fit connection, hot-melt connection, welding, or snap-fit connection.

17. An energy storage module, configured as the energy storage system according to any one of claims 1 to 16, wherein the energy storage system comprises a main heat exchange medium pipeline, and the energy storage module comprises a heat exchange unit, a self-sealing joint unit, and at least one battery cell,
the heat exchange unit is configured to exchange heat with the battery cell, the heat exchange unit is provided with a heat exchange medium port for a heat exchange medium to enter or exit, and the self-sealing joint unit is configured to communicate the heat exchange medium port with the main heat exchange medium pipeline.

18. An electric apparatus, comprising the energy storage system according to any one of claims 1 to 16 or the energy storage module according to claim 17, wherein the battery cell is used to supply electric energy to the electric apparatus.
